# DEMANDE DE BREVET EUROPEEN

(11) **EP 3 940 379 A1**
(43) Date de publication de la demande: **19.01.2022**
(21) Numéro de dépôt: 21185004.5
(22) Date de dépôt: 12.07.2021
(51) Int. Cl.: G01N 29/036, G01N 29/02, G01N 29/032, G01N 29/46, G01N 11/10, G01N 11/16, G01N 29/22, F02M 25/022

(54) **DISPOSITIF DE DETECTION DU GEL DANS UN RESERVOIR D'EAU A BORD D'UN VEHICULE**

(30) Priorité: 16.07.2020 FR 2007460
(71) Demandeur: RENAULT s.a.s., 92100 Boulogne-Billancourt (FR)
(72) Inventeur: PAILLARD, Jerome, 28700 Léthuin (FR); VEILLON, Benjamin, 78100 Saint Germain en Laye (FR)

(57) **Abrégé**

L'invention propose un ensemble comportant un réservoir (10) prévu pour contenir un liquide et un dispositif de détection (26) du gel capable de détecter le gel du liquide contenu à l'intérieur du réservoir comprenant:
un capteur acoustique (32) agencé dans un boîtier (30) monté fixe sur une surface externe (20) du réservoir et prévu pour capter un signal sonore représentatif de l'état gelé ou non du liquide,
et une unité de traitement destinée à recevoir, traiter et analyser les signaux sonores captés par le capteur acoustique,
caractérisé en ce que le dispositif de détection du gel comporte une masse mobile (28) libre de se déplacer dans une zone (29) agencée dans le réservoir de manière que, lorsque la masse mobile se déplace dans le liquide dans un état non gelé, le capteur acoustique détecte un impact de la masse mobile contre au moins une surface interne (18) du réservoir.

## Description

### Domaine technique de l'invention

La présente invention concerne un dispositif de détection du gel, et plus particulièrement un dispositif de détection du gel à l'intérieur d'un réservoir appartenant à un système d'injection d'eau d'un moteur à combustion interne d'un véhicule automobile.

### Arrière-plan technique

L'injection d'eau dans les moteurs à combustion interne est une technique employée dans le but d'améliorer ou de modifier les caractéristiques de fonctionnement du moteur, et notamment pour refroidir les chambres de combustion du moteur, en vue de respecter les normes de dépollution. Classiquement, un moteur à combustion interne comprend au moins un cylindre associé à une chambre de combustion comprenant un piston mobile, une soupape d'admission, un conduit d'admission dans lequel l'air est transporté jusqu'à la chambre de combustion, un injecteur de carburant qui injecte du carburant par exemple directement dans le cylindre (moteur à « injection directe ») ou dans le conduit d'admission en amont de la soupape d'admission (moteur à « injection indirecte »), une soupape d'échappement et un conduit d'échappement prévu pour l'évacuation des gaz de combustion.

Dans un premier mode de réalisation avec injection indirecte d'eau, un injecteur d'eau est associé à chaque cylindre, monté dans le conduit d'admission et injecte de l'eau en amont de chaque soupape d'admission et en aval d'une vanne de réglage du débit d'air du moteur.

Selon un autre mode de réalisation avec injection indirecte d'eau, un seul injecteur d'eau est associé à l'ensemble des cylindres et y injecte l'eau en amont ou en aval de la vanne de réglage.

Selon une variante de réalisation, l'injection d'eau est directe et un injecteur d'eau est associé à chaque cylindre et y injecte l'eau directement.

Selon une autre variante de réalisation, une combinaison d'injection directe et indirecte d'eau est possible.

Le ou les injecteurs d'eau sont alimentés en eau, à partir d'un réservoir contenant de l'eau au moyen d'un module de pompe agencé à l'intérieur du réservoir de façon à être immergé dans le liquide contenu ou bien agencé à l'extérieur du réservoir et relié à celui-ci au moyen d'une canalisation de puisage.

L'installation est placée sous la surveillance d'un calculateur électronique (ou ECU selon l'acronyme anglais pour : Electronic Control Unit) du moteur à combustion interne qui est relié notamment au module de pompe et aux injecteurs, et qui est apte à mettre le module de pompe en marche ou à l'arrêt et à piloter la durée d'ouverture des injecteurs d'eau afin d'ajuster la quantité d'eau injectée dans les cylindres en fonction de paramètres de fonctionnement du moteur.

Les températures extérieures basses sont à l'origine de la formation de glace à l'intérieur du réservoir d'eau, ce qui empêche le bon déroulement de l'étape de pompage et de l'étape d'injection de l'eau dans la chambre de combustion. La formation de glace peut provoquer un mauvais fonctionnement, voire la casse du moteur, mais aussi la potentielle rupture du module de pompe.

Une première solution connue à ce problème technique consiste à procéder au réchauffage de l'eau gelée dans le réservoir de manière à liquéfier l'eau préalablement à l'étape de pompage de l'eau. Pour cela, il est connu d'utiliser une résistance chauffante implantée à l'intérieur du réservoir et alimentée lors du démarrage du moteur. Le chauffage systématique de l'eau contenue dans le réservoir est coûteux en énergie et entraîne une surconsommation de carburant du moteur ou de courant de la batterie.

Afin de réduire la consommation, une solution consiste à détecter l'état de l'eau contenue dans le réservoir afin de commander le chauffage de l'eau lorsqu'un phénomène de gel ou un risque de gel est présent, et d'interdire ou d'autoriser directement l'alimentation en eau en fonction de cette donnée. Pour cela, il est possible de mesurer la température de l'eau contenue dans le réservoir afin de déterminer son état solide ou liquide.

En phase de transition de l'eau, c'est-à-dire lors du passage de la phase liquide à la phase solide et vice-versa, il est difficile de connaître l'état réel de l'eau dans le réservoir par une simple mesure de température.

Pendant une phase de réchauffement, même si la température mesurée est supérieure à 0°C, la chaleur latente de fusion implique que le passage de l'eau de l'état solide à l'état liquide n'est pas instantané. Par conséquent, la méthode de détermination de l'état de l'eau par une mesure de température n'est pas entièrement fiable.

Dans le document US2019025259, on a proposé un dispositif de détection du gel prévu pour détecter le gel formé dans un récipient adapté pour contenir et transporter de l'eau. Ce détecteur de gel comprend :
- un boîtier de microphone comprenant un microphone monté sur une surface extérieure du récipient et prévu pour recevoir les signaux sonores émis à l'intérieur du récipient, les signaux sonores formant un motif acoustique,
- un élément de fixation pour fixer le microphone sur le récipient,
- et une unité de traitement prévue pour recevoir, traiter et analyser le motif acoustique de chaque signal sonore transmis par le microphone et pour être activée lorsqu'au moins une valeur de seuil prédéterminée est détectée dans le motif acoustique reçu par le microphone, la valeur de seuil indique une congélation locale de l'eau à l'intérieur du récipient.

Un tel dispositif n'est pas adapté à une implantation dans un réservoir à bord d'un véhicule car les variations de bruit d'écoulement dans les canalisations d'alimentation d'injecteurs ne sont pas détectables, de même que les bruits de déplacements faibles de l'eau dans le réservoir au sein duquel le liquide n'effectue pas distinctement un mouvement de circulation.

La présente invention a pour but d'apporter une solution à ce problème.

### Résumé de l'invention

L'invention propose un ensemble comportant :
- un réservoir prévu pour contenir un liquide,
- et un dispositif de détection du gel capable de détecter le gel du liquide contenu à l'intérieur du réservoir comprenant :
   -- un capteur acoustique qui est agencé dans un boîtier monté fixe sur une surface externe du réservoir et qui est prévu pour capter un signal sonore représentatif de l'état gelé ou non gelé du liquide contenu dans le réservoir,
   -- et une unité de traitement destinée à recevoir, traiter et analyser les signaux sonores captés par le capteur acoustique.

L'ensemble est caractérisé en ce que le dispositif de détection du gel comporte une masse mobile libre de se déplacer dans une zone agencée à l'intérieur du réservoir de manière que, lorsque la masse mobile se déplace dans le liquide dans un état non gelé, le capteur acoustique détecte au moins un impact de la masse mobile contre au moins une surface interne du réservoir.

Selon d'autres caractéristiques du dispositif de détection du gel :
- la zone est délimitée par une paroi de maintien supérieure agencée en vis-à-vis de la paroi de fond du réservoir pour retenir la masse mobile dans une portion inférieure du réservoir ;
- la zone est délimitée par au moins une paroi de maintien latérale agencée en vis-à-vis d'une paroi latérale du réservoir pour guider la masse mobile vers le capteur acoustique selon une direction de guidage de la masse mobile ;
- la zone est délimitée par la paroi de maintien supérieure du réservoir et par deux parois de maintien latérale qui délimitent un tunnel qui loge la masse mobile ;
- chaque paroi de maintien est réalisée sous la forme d'une paroi ajourée, notamment une grille ;
- l'unité de traitement est configurée pour détecter un pic d'amplitude du signal sonore correspondant à la réponse impulsionnelle d'une paroi latérale à l'impact de la masse mobile contre au moins une surface interne du réservoir, qui soit au moins égal à une valeur de seuil du pic d'amplitude du signal sonore ;
- l'unité de traitement est configurée pour détecter la fréquence de résonance d'une paroi latérale produite par l'impact de la masse mobile contre au moins une surface interne d'une paroi latérale du réservoir, qui soit comprise dans une fenêtre de fréquences de résonnance prédéterminée ;
- un insert est agencé sur une paroi latérale du réservoir pour modifier les propriétés acoustiques de la paroi latérale pour améliorer la détection de l'impact de la masse mobile contre la surface interne par le capteur acoustique.

L'invention propose aussi un système d'injection d'eau dans un mélange de combustion d'un moteur à combustion interne comportant un ensemble selon l'invention dans lequel le réservoir contient l'eau à injecter.

L'invention propose de plus, un véhicule équipé d'un système d'injection d'eau selon l'invention dont le réservoir est agencé avec sa zone de sorte que la direction de guidage de la masse mobile est orientée selon la direction de roulage du véhicule.

Le dispositif de détection du gel selon l'invention est capable de détecter le gel du liquide contenu à l'intérieur du réservoir au moyen d'un capteur acoustique et d'une unité de traitement configurés pour détecter les impacts d'une masse mobile contre une surface interne du réservoir.

Si le capteur acoustique détecte un signal sonore, alors l'état du liquide contenu dans le réservoir est considéré comme non gelé par l'unité de traitement. En outre, l'absence de signal sonore implique que la masse mobile ne peut pas se déplacer pour percuter les parois latérales du réservoir. Par conséquent, l'état du liquide contenu dans le réservoir est considéré comme gelé par l'unité de traitement. Ainsi, le système d'injection d'eau peut être activé en cas de détection de l'état non gelé du liquide et désactivé en cas de détection de l'état gelé du liquide.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] - la figure 1 est une vue schématique partielle en perspective d'un réservoir comprenant un module de pompe et un dispositif de détection du gel comportant une paroi de maintien selon un premier mode de réalisation de l'invention ;
[Fig.2] - la figure 2 est une vue analogue à celle de la figure 1 sur laquelle le dispositif de détection du gel comporte trois parois de maintien, selon un deuxième mode de réalisation de l'invention ;
[Fig.3] - la figure 3 est une vue analogue à celle de la figure 2 sur laquelle le dispositif de détection du gel comporte une goulotte de guidage et la masse mobile est une sphère, selon un quatrième mode de réalisation de l'invention.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal. Par convention, l'axe longitudinal L est orienté de l'arrière vers l'avant du réservoir.

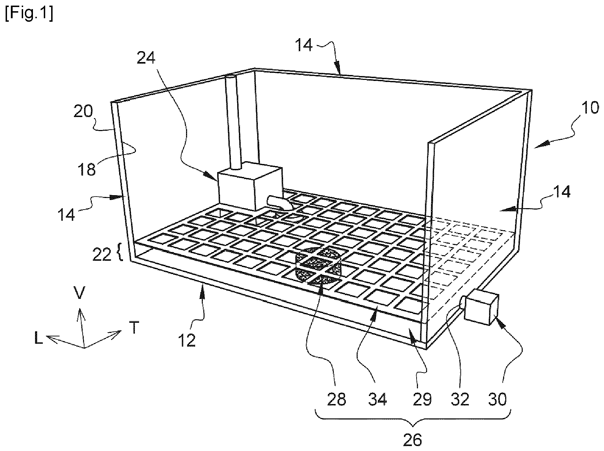

Dans la description qui va suivre, des éléments identiques, similaires ou analogues seront désignés par les mêmes références alphanumériques. Les figures 1, 2 et 3 représentent un réservoir 10 prévu pour contenir un liquide étant de préférence de l'eau. Le réservoir 10 est équipé d'un module de pompe 24 destiné à aspirer le liquide et d'un dispositif de détection 26 du gel capable de détecter le gel du liquide contenu à l'intérieur du réservoir 10. Le réservoir 10 est représenté sous la forme d'un parallélogramme s'étendant selon une direction longitudinale et comportant une paroi de fond 12, une paroi supérieure et quatre parois latérales 14 dont deux parois latérales longitudinales, deux parois latérales transversales. La paroi supérieure et la paroi latérale frontale n'ont pas été représentées afin de faciliter la compréhension des figures. Chaque paroi 12, 14, est composée d'une surface interne 18 orientée vers l'intérieur du réservoir 10 et d'une surface externe 20 orientée vers l'extérieur du réservoir 10.

Selon un mode de réalisation représenté aux figures 1 à 4, le module de pompe 24 est agencé à l'intérieur du réservoir 10 de façon à être immergé dans le liquide contenu dans le réservoir 10 afin d'aspirer le liquide à partir d'une portion inférieure 22 du réservoir 10.

Selon un premier mode de réalisation du dispositif de détection 26 du gel représenté à la figure 1, le dispositif de détection 26 du gel est agencé à la portion inférieure 22 du réservoir 10 et comprend :
- un capteur acoustique 32 agencé dans un boîtier 30 monté fixe sur une surface externe 20 du réservoir 10 et qui est prévu pour capter un signal sonore représentatif de l'état gelé ou non gelé du liquide contenu dans le réservoir 10,
- une unité de traitement non représentée et destinée à recevoir, traiter et analyser les signaux sonores captés par le capteur acoustique 32,
- et une masse mobile 28 réalisée sous la forme d'un palet et libre de se déplacer dans une zone 29 agencée à l'intérieur du réservoir 10 de manière que le capteur acoustique 32 détecte au moins un impact de la masse mobile 28 contre au moins une surface interne 18 du réservoir 10 lorsque la masse mobile 28 se déplace dans le liquide dans un état non gelé.

La zone 29 est l'espace dans lequel la masse mobile 28 peut se déplacer librement. La zone 29 représentée à la figure 1 est délimitée par la paroi de fond 12, les quatre parois latérales 14 et une paroi de maintien supérieure 34 agencée en vis-à-vis de la paroi de fond 12 et destinée à retenir la masse mobile dans la portion inférieure 22 du réservoir 10.

Le boîtier 30 renfermant le capteur acoustique 32 est agencé en vis-à-vis d'une extrémité latérale de la zone 29.

Dans cette première configuration du dispositif de détection 26 du gel, la zone d'impact de la masse mobile 28 avec le réservoir 10 est constituée par les surfaces internes 18 des quatre parois latérales verticales 14 du réservoir 10 coïncidant avec la zone 29.

Selon un mode de réalisation de l'invention, la paroi de maintien supérieure 34 est une plaque ajourée telle qu'une grille permettant ainsi le passage et la libre circulation du liquide à l'intérieur du réservoir 10 du dispositif de détection 26 du gel.

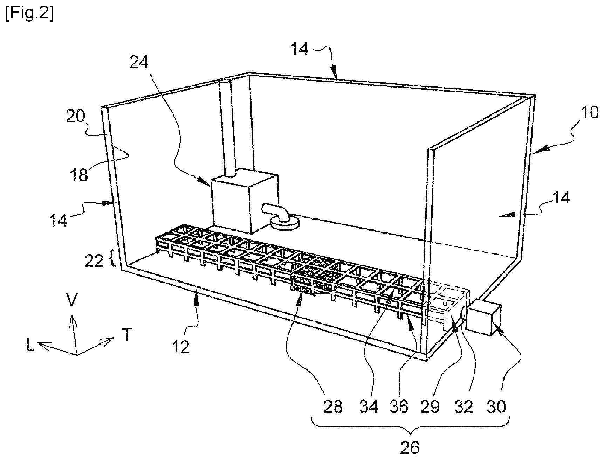

Selon un deuxième mode de réalisation du dispositif de détection 26 du gel représenté à la figure 2, la zone 29 est délimitée par la paroi de fond 12, par une paroi de maintien supérieure 34 agencée en vis-à-vis de la paroi de fond 12 et s'étendant suivant toute la longueur du réservoir 10, et par deux parois de maintien latérales 36 verticales et agencées parallèlement l'une par rapport à l'autre.

Les deux parois de maintien latérales 36 s'étendent entre les deux parois latérales 14 transversales du réservoir 10 opposées dont l'une porte ici le capteur acoustique 32.

La zone 29 forme ainsi un tunnel de maintien et de guidage s'étendant selon une direction longitudinale et logeant la masse mobile 28 à l'intérieur afin de retenir et guider la masse mobile 28 dans la portion inférieure 22 du réservoir 10 et vers le capteur acoustique 32.

Ce mode de réalisation consiste à orienter les impacts de la masse mobile 28 contre le réservoir 10 dans la direction du capteur acoustique 32 afin de faciliter la différentiation entre les signaux sonores dus aux impacts de la masse mobile 28 et des signaux sonores provoqués par le bruit environnant. Dans cette deuxième configuration du dispositif de détection 26 du gel, la zone d'impact de la masse mobile 28 avec le réservoir 10 est principalement constituée par les surfaces internes 18 de seulement deux parois latérales 14 transversales du réservoir 10 opposées coïncidant avec la zone 29.

Le boîtier 30 qui loge le capteur acoustique 32 est donc monté fixe sur une surface externe 20 de l'une des deux parois latérales 14 transversales comportant la zone d'impact de la masse mobile 28 avec le réservoir 10. Selon un troisième mode de réalisation du dispositif de détection 26 du gel non représenté, la zone 29 est délimitée par la paroi de fond 12, par une paroi latérale 14 transversale du réservoir 10, par une paroi de maintien supérieure 34 agencée en vis-à-vis de la paroi de fond 12 et raccourcie de sorte que la longueur de la paroi de maintien supérieure 34 est inférieure à la longueur du réservoir 10 et par trois parois de maintien latérale 36 verticales. La zone 29 forme ainsi un tunnel raccourci s'étendant selon une direction longitudinale et logeant la masse mobile 28 à l'intérieur afin de retenir et guider la masse mobile 28 dans le fond du réservoir 10 et vers le capteur acoustique 32.

Ce mode de réalisation consiste à rapprocher les impacts de la masse mobile 28 contre le réservoir 10 dans la direction du capteur acoustique 32 afin de renforcer la différentiation entre les signaux sonores dus aux impacts de la masse mobile 28 et les signaux sonores provoqués par le bruit environnant.

Dans cette troisième configuration du dispositif de détection 26 du gel, la zone d'impact de la masse mobile 28 avec le réservoir 10 est constituée par la surface interne 18 de l'unique paroi latérale 14 transversale du réservoir 10 coïncidant avec la zone 29.

Le boîtier 30 renfermant le capteur acoustique 32 est alors monté fixe sur la surface externe 20 de la paroi latérale 14 transversale comportant la zone d'impact de la masse mobile 28 avec le réservoir 10.

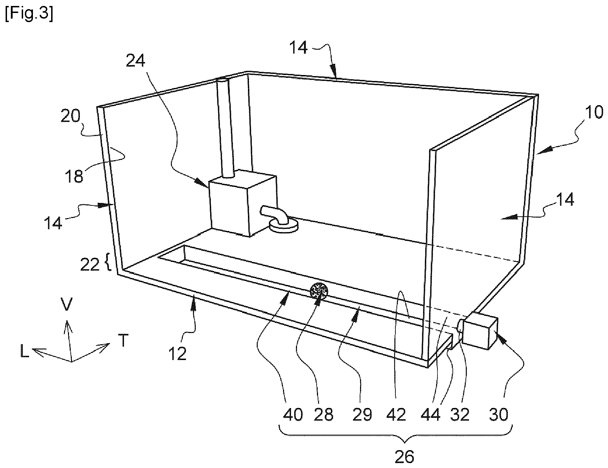

Selon un quatrième mode de réalisation du dispositif de détection 26 du gel représenté à la figure 3, la zone 29 est délimitée par une goulotte ou rainure de guidage 40.

La goulotte de guidage 40 est délimitée par une paroi de fond 42 de la goulotte de guidage 40 agencée en-dessous de la paroi de fond 12 du réservoir 10 et s'étendant suivant toute la longueur du réservoir 10 et quatre parois latérales 44 verticales de la goulotte de guidage 40.

Deux parois latérales 44 opposées de la goulotte de guidage 40 s'étendent selon une direction longitudinale et les deux autres parois latérales 44 opposées de la goulotte de guidage 40 s'étendent selon une direction transversale dans la continuité des parois latérales 14 transversales du réservoir 10 dont l'une porte ici le capteur acoustique 32.

La zone 29 forme ainsi une goulotte ou une rainure s'étendant selon une direction longitudinale, contenant la masse mobile 28 à l'intérieur et destinée à guider la masse mobile 28 dans la portion inférieure 22 du réservoir 10 et vers le capteur acoustique 32.

Dans cette quatrième configuration du dispositif de détection 26 du gel, la zone d'impact de la masse mobile 28 avec le réservoir 10 est constituée par les surfaces internes 18 de seulement deux parois latérales 44 transversales de la goulotte de guidage 40 s'étendant dans la continuité des parois latérales 14 transversales du réservoir 10.

Le boîtier 30 renfermant le capteur acoustique 32 est donc monté fixe sur une surface externe 20 de l'une des deux parois latérales 14 comportant la zone d'impact de la masse mobile 28 avec le réservoir 10.

Dans le dispositif de détection 26 du gel selon tous les modes de réalisation de l'invention, la masse mobile 28 est de préférence réalisée dans un matériau choisi de manière que sa densité soit suffisamment grande par rapport à la densité du liquide contenu dans le réservoir 10 afin que la masse mobile 28 reste en contact avec la paroi de fond 12, 42 du réservoir 10 ou de la goulotte de guidage 44. Cependant, cette condition de densité plus élevée de la masse mobile 28 n'est indispensable uniquement dans le quatrième mode de réalisation, dans lequel aucun dispositif de maintien 34 n'est prévu pour maintenir la masse mobile 28 au fond du réservoir 10.

Selon une variante du mode de réalisation de l'invention représentée à la figure 3, la paroi de fond 12 du réservoir 10 est constituée de deux plans inclinés permettant à la masse mobile 28 de rouler en direction de la goulotte de guidage 40.

Selon une variante de réalisation de l'invention, le boîtier 30 renfermant le capteur acoustique 32 est monté fixe sur la surface externe 20 de la paroi latérale 14 comportant la zone d'impact de la masse mobile 28 avec le réservoir 10, mais en dehors de cette zone d'impact.

Le boîtier 30 du capteur acoustique 32 peut être agencé autrement qu'en vis-à-vis de la zone 29.

Selon un mode de réalisation préférentiel du système d'injection d'eau dans un mélange de combustion d'un moteur à combustion interne de l'invention, la zone 29 du dispositif de détection 26 s'étend de sorte que la direction de guidage de la masse mobile 28 est orientée selon la direction de roulage d'un véhicule équipé du système d'injection d'eau.

Un tel agencement permet d'utiliser les accélérations et freinages du véhicule afin de provoquer des déplacements de la masse mobile 28 pour multiplier les impacts exploitables de la masse mobile 28 avec le réservoir 10, c'est-à-dire les impacts les plus forts qui sont les impacts selon la direction longitudinale i.e. dans la direction de roulage du véhicule, et faciliter la détection de l'état solide ou non du liquide contenu dans le réservoir 10 par la combinaison du capteur acoustique 32 et de l'unité de traitement.

La masse mobile 28 selon l'invention peut être réalisée suivant plusieurs formes, par exemple telles qu'un palet ou bien une sphère telle que représentée à la figure 3.

Selon une variante de l'invention non représentée, au moins un insert est agencé sur une paroi latérale 14 du réservoir 10 afin de modifier les propriétés acoustiques de la paroi latérale 14 pour améliorer la détection de l'impact de la masse mobile 28 contre la surface interne 18 par le capteur acoustique 32 agencé de préférence sur cette paroi.

La modification des propriétés acoustiques d'une ou plusieurs parois latérales 14 par l'ajout d'un insert 38 a pour but d'isoler le signal sonore généré par l'impact de la masse mobile 28 contre une paroi latérale 14 du réservoir 10 par rapport au bruit environnant.

L'insert est agencé sur la paroi latérale 14 du réservoir 10 concernée par l'impact de la masse mobile 28, et il peut être positionné :
- soit à l'intérieur de la zone d'impact de la masse mobile 28 avec le réservoir 10 ; dans ce cas, les propriétés du matériau sont sélectionnées de façon à obtenir une rigidité suffisante de la paroi latérale 14 au niveau du point de contact de la masse mobile 28 ;
- soit à l'extérieur de la zone d'impact de la masse mobile 28 avec le réservoir 10 ; dans ce cas, les propriétés du matériau sont sélectionnées de façon à obtenir une fréquence de résonance adaptée de la paroi latérale 14 au niveau du point de contact de la masse mobile 28, par exemple une fréquence de résonance éloignée des fréquences émises par les bruits environnants.

Le dispositif de détection 26 du gel selon l'invention permet de détecter l'état gelé ou non gelé du liquide contenu dans le réservoir 10 au moyen du capteur acoustique 32 configuré pour détecter un signal sonore correspondant à la réponse impulsionnelle d'une paroi latérale 14 à l'impact de la masse mobile 28 contre au moins une surface interne 18 du réservoir 10. Le signal sonore ne nécessite pas de traitement complexe et les critères de détection sont :
- absence de signal sonore : état gelé du liquide contenu dans le réservoir 10,
- présence de signal sonore : état non gelé du liquide contenu dans le réservoir 10.

Selon un mode de réalisation du dispositif de détection 26 du gel, l'unité de traitement est configurée pour détecter un pic d'amplitude correspondant à la réponse impulsionnelle d'une paroi latérale 14 à l'impact de la masse mobile 28 contre au moins une surface interne 18 du réservoir 10, au moins égal à une valeur de seuil prédéterminée A1.

Dans ce type de configuration de l'unité de traitement, l'état non gelé du liquide contenu dans le réservoir 10 est détecté par la présence de pics d'amplitude du signal sonore, chaque impact de la masse mobile 28 contre une paroi latérale 14 du réservoir 10 est associé à un pic d'amplitude du signal sonore.

Selon un autre mode de réalisation du dispositif de détection 26 du gel, l'unité de traitement est configurée pour détecter la fréquence de résonance d'une paroi latérale 14 produite par l'impact de la masse mobile 28 contre au moins une surface interne 18 d'une paroi latérale 14 du réservoir 10, dans une fenêtre de fréquences prédéterminée, comprise entre une valeur inférieure de fréquence A2m in et une valeur supérieure de fréquence A2max prédéterminées.

Dans ce type de configuration de l'unité de traitement, l'état non gelé du liquide contenu dans le réservoir est détecté par l'intermédiaire de la transformée de Fourier discrète rapide (FFT Fast Fourier Transform), chaque impact de la masse mobile 28 contre une paroi latérale 14 du réservoir 10 est associé à une fréquence de résonance de la paroi latérale 14 impactée.

Les valeurs de seuil A1, et la fenêtre comprise entre les valeurs A2min et A2max sont déterminées par des essais dynamiques sur un véhicule équipé ou bien sur un banc d'essai afin d'alimenter un modèle cartographique. Bien entendu, les deux critères peuvent être combinés pour obtenir une meilleure fiabilité de détection.

### LEGENDE :

- 10 :: réservoir
- 12 :: paroi de fond du réservoir
- 14 :: paroi latérale du réservoir
- 18 :: surface interne
- 20 :: surface externe
- 22 :: portion inférieure
- 24 :: module de pompe
- 26 :: dispositif de détection
- 28 :: masse mobile
- 29 :: zone
- 30 :: boîtier
- 32 :: capteur acoustique
- 34 :: paroi de maintien supérieure
- 36 :: paroi de maintien latérale
- 40 :: goulotte de guidage
- 42 :: paroi de fond de la goulotte de guidage
- 44 :: paroi latérale de la goulotte de guidage

## Revendications

1. Ensemble comportant :
- un réservoir (10) prévu pour contenir un liquide ;
- et un dispositif de détection (26) du gel capable de détecter le gel du liquide contenu à l'intérieur du réservoir (10) comprenant :
-- un capteur acoustique (32) qui est agencé dans un boîtier (30) monté fixe sur une surface externe (20) du réservoir (10) et qui est prévu pour capter un signal sonore représentatif de l'état gelé ou non gelé du liquide contenu dans le réservoir (10),
-- et une unité de traitement destinée à recevoir, traiter et analyser les signaux sonores captés par le capteur acoustique (32) ;
**caractérisé en ce que** le dispositif de détection (26) du gel comporte une masse mobile (28) libre de se déplacer dans une zone (29) agencée à l'intérieur du réservoir (10) de manière que, lorsque la masse mobile (28) se déplace dans le liquide dans un état non gelé, le capteur acoustique (32) détecte au moins un impact de la masse mobile (28) contre au moins une surface interne (18) du réservoir (10).

2. Dispositif de détection (26) du gel selon la revendication 1, **caractérisé en ce que** la zone (29) est délimitée par une paroi de maintien supérieure (34) agencée en vis-à-vis de la paroi de fond (12) du réservoir (10) pour retenir la masse mobile (28) dans une portion inférieure (22) du réservoir (10).

3. Dispositif de détection (26) du gel selon l'une quelconque des revendications précédentes, **caractérisé en ce que** la zone (29) est délimitée par au moins une paroi de maintien latérale (36) agencée en vis-à-vis d'une paroi latérale (18) du réservoir (10) pour guider la masse mobile (28) vers le capteur acoustique (32) selon une direction de guidage de la masse mobile (28).

4. Dispositif de détection (26) du gel selon les revendications 2 et 3, **caractérisé en ce que** la zone (29) est délimitée par la paroi de maintien supérieure (34) du réservoir (10) et par deux parois de maintien latérale (36) qui délimitent un tunnel qui loge la masse mobile (28).

5. Dispositif de détection (26) du gel selon les revendications 2, 3 ou 4 **caractérisé, en ce que** chaque paroi de maintien (34, 36) est réalisée sous la forme d'une paroi ajourée, notamment une grille.

6. Dispositif de détection (26) du gel selon l'une quelconque des revendications précédentes, **caractérisé en ce que** l'unité de traitement est configurée pour détecter un pic d'amplitude du signal sonore correspondant à la réponse impulsionnelle d'une paroi latérale (14) à l'impact de la masse mobile (28) contre au moins une surface interne (18) du réservoir (10), qui soit au moins égal à une valeur de seuil du pic d'amplitude du signal sonore.

7. Dispositif de détection (26) du gel selon l'une quelconque des revendications précédentes, **caractérisé en ce que** l'unité de traitement est configurée pour détecter la fréquence de résonance d'une paroi latérale (14) produite par l'impact de la masse mobile (28) contre au moins une surface interne (18) d'une paroi latérale (14) du réservoir (10), qui soit comprise dans une fenêtre de fréquences de résonnance prédéterminée.

8. Dispositif de détection (26) du gel selon l'une quelconque des revendications précédentes, **caractérisé en ce qu'**il comporte un insert agencé sur une paroi latérale (14) du réservoir (10) pour modifier les propriétés acoustiques de la paroi latérale (14) pour améliorer la détection de l'impact de la masse mobile (28) contre la surface interne (18) par le capteur acoustique (32).

9. Système d'injection d'eau dans un mélange de combustion d'un moteur à combustion interne, **caractérisé en ce qu'**il comporte un ensemble selon l'une quelconque des revendications précédentes dans lequel le réservoir (10) contient l'eau à injecter.

10. Véhicule équipé d'un système d'injection d'eau selon la revendication 9 dont le réservoir (10) est agencé avec sa zone (29), selon la revendication 2 ou 3, de sorte que la direction de guidage de la masse mobile (28) est orientée selon la direction de roulage du véhicule.
